# EUROPEAN PATENT APPLICATION

(11) **EP 4 056 870 A1**
(43) Date of publication of application: **14.09.2022**
(21) Application number: 22160330.1
(22) Date of filing: 04.03.2022
(51) Int. Cl.: F16H 1/32

(54) **SPEED REDUCER**

(30) Priority: 11.03.2021 JP 2021039010
(71) Applicant: Nabtesco Corporation, Tokyo 102-0093 (JP)
(72) Inventor: Masuda, Tomohiko, Chiyoda-ku, Tokyo (JP); Shimada, Hideshi, Chiyoda-ku, Tokyo (JP)
(74) Representative: Grünecker Patent- und Rechtsanwälte PartG mbB

(57) **Abstract**

One aspect of the present invention provides a speed reducer (1) including a casing (100), a speed reduction mechanism (200) provided in the casing (100), where the speed reduction mechanism (200) is configured to reduce rotation input thereto from a drive source (600) and output the reduced rotation, and a display unit (70) shaped such that the display unit (70) is attached onto a surface of the casing (100), where the display unit (70) is configured to display notification information. The speed reduction mechanism (200) includes a transmitting unit rotatably provided on the casing (100).

## Description

### TECHNICAL FIELD

The present invention relates to a speed reducer.

### BACKGROUND

In the conventional art, rotary advertising lights for vehicles are known as disclosed in, for example, Patent Literature 1. In the disclosed rotary advertising light for vehicles, a motor and a speed reducer are contained in a case. The case is surrounded by an annular fluorescent lamp. At the upper end of the main shaft of the speed reducer, the central part of the cylindrical rotary advertising light is fixedly attached. The rotary advertising light externally surrounds the motor, speed reducer and fluorescent lamp. The rotary advertising light is externally covered by a transparent outer cylinder. Such rotary advertising lights for vehicles can rotate to produce advertising effects.

### RELEVANT REFERENCES

### LIST OF RELEVANT PATENT LITERATURE

Patent Literature 1: Japanese Patent Application Publication No. S63-081388

### SUMMARY

The above-described rotary advertising lights for vehicles use speed reducers. When speed reducers are mounted on a variety of devices, it is often difficult to check the speed reducers by observing their appearances.

The present invention is made in view of the above, and an object of the present invention is to provide a speed reducer that can be easily checked by observing its appearance.
(1) One aspect of the present invention provides a speed reducer including a casing, a speed reduction mechanism provided in the casing, where the speed reduction mechanism is configured to reduce rotation input thereto from a drive source and output the reduced rotation, and a display unit shaped such that the display unit is attached onto a surface of the casing, where the display unit is configured to display notification information. The speed reduction mechanism includes a transmitting unit rotatably provided on the casing.
(2) In the above speed reducer, the display unit may be formed on at least part of the surface of the casing so as to extend circumferentially along the surface of the casing.
(3) In the above speed reducer, the casing may include a body portion having a cylindrical shape, and a flange portion shaped such that the flange portion projects outward in a radial direction from the body portion. The display unit may be formed on at least part of a surface of the flange portion.
(4) In the above speed reducer, the display unit may be formed on the drive source or on an external mechanism to which rotation output from the transmitting unit is input.
(5) In the above speed reducer, the notification information may be related to a manufacturer or advertisement of the speed reducer.
(6) In the above speed reducer, the notification information may be related to a temperature of the speed reducer.
(7) In the above speed reducer, the notification information may be related to a load on the speed reducer.
(8) In the above speed reducer, the notification information may be related to a temperature of the external mechanism.
(9) In the above speed reducer, the notification information may be related to a load on the external mechanism.
(10) In the above speed reducer, the notification information may be related to a distance between the speed reducer and a target object.
(11) In the above speed reducer, the display unit may change contents of the notification information.
(12) In the above speed reducer, the display unit may change regions in which the notification information is displayed.
(13) The above speed reducer may include a power generating unit for generating power to be used to operate the display unit.
(14) In the above speed reducer, the display unit may be operated using power from a power supply unit for controlling power to drive the drive source.
(15) One aspect of the present invention provides a speed reducer including a speed reduction mechanism for changing the number of rotations at a predetermined ratio and transmitting a driving force between a first member and a second member, where the speed reduction mechanism is a gear device, and a display unit for displaying notification information. The speed reduction mechanism includes an eccentric portion, an oscillating gear having an insertion hole into which the eccentric portion is inserted, where the oscillating gear has teeth, a first cylinder mountable on one of the first and second members, and a second cylinder mountable on the other of the first and second members. The first cylinder has internal teeth meshing with the teeth of the oscillating gear. The second cylinder is positioned inside the first cylinder in the radial direction while holding the oscillating gear. The first and second cylinders are concentrically rotatable relative to each other when acted upon by oscillation of the oscillating gear caused by rotation of the eccentric portion. The display unit is shaped such that the display unit is attached onto a surface of the first cylinder.
(16) One aspect of the present invention provides a speed reducer including a first cylinder having a body portion and a flange portion, where the body portion is shaped cylindrically, and the flange portion is shaped such that the flange portion projects outward in a radial direction from the body portion, a speed reduction mechanism for changing the number of rotations at a predetermined ratio and transmitting a driving force between a first member and a second member, where the speed reduction mechanism is a gear device, and a display unit attached onto at least part of a surface of the flange portion so as to extend circumferentially along the surface of the flange portion, where the display unit is configured to display manufacturer or advertising information for the speed reducer. The speed reduction mechanism includes an eccentric portion, and an oscillating gear having an insertion hole into which the eccentric portion is inserted, where the oscillating gear has teeth. The first cylinder is mountable on one of the first and second members and has internal teeth meshing with the teeth of the oscillating gear. The speed reduction mechanism further includes a second cylinder mountable on the other of the first and second members. The second cylinder is positioned inside the first cylinder in the radial direction while holding the oscillating gear. The first and second cylinders are concentrically rotatable relative to each other when acted upon by oscillation of the oscillating gear caused by rotation of the eccentric portion.

### ADVANTAGEOUS EFFECTS

The above-described speed reducers can be easily inspected by observing their appearance.

### BRIEF DESCRIPTION OF THE DRAWINGS

Fig. 1 is a perspective view showing an example of a speed reducer relating to a first embodiment.
Fig. 2 is a sectional view of the speed reducer relating to the first embodiment.
Fig. 3 is a sectional view taken along the line III-III in Fig. 2.
Fig. 4 is a block diagram showing an example functional configuration of the speed reducer relating to the first embodiment.
Fig. 5 shows, for example, how a display unit and other units are mounted in the first embodiment.
Fig. 6 is a front view showing a flange portion of the speed reducer relating to the first embodiment in an axial direction.
Fig. 7 is a block diagram showing another example of the speed reducer relating to the first embodiment.
Fig. 8 is a block diagram showing another example of the speed reducer relating to the first embodiment.
Fig. 9 is a perspective view showing an example of an actuator including a speed reducer relating to a second embodiment and a motor serving as a drive source.
Fig. 10 is a block diagram showing the functional configuration of the speed reducer relating to the second embodiment.
Fig. 11 is a block diagram showing an example configuration of a speed reducer relating to a third embodiment.
Fig. 12 shows, for example, how a display unit and other units are mounted in the third embodiment.
Fig. 13 is a block diagram showing an example configuration of the speed reducer relating to the third embodiment.
Fig. 14 is a block diagram showing an example configuration of a speed reducer relating to a fourth embodiment.

### DESCRIPTION OF THE PREFERRED EMBODIMENTS

The following now describes in detail a speed reducer and a display device for a speed reducer relating to embodiments of the present invention with reference to the drawings. In the following description of the embodiments, which may have corresponding elements, such corresponding elements will be denoted by the same reference numerals in all of the embodiments and may not be repeatedly described. In the following description, such terms as "parallel," "orthogonal," "center" and "coaxial" may appear to describe relative or absolute positions. These terms are not only strictly used but also allow some tolerances and relative differences in angle and distance as long as the same effects can be still produced.

### <First Embodiment>

### <Speed Reducer>

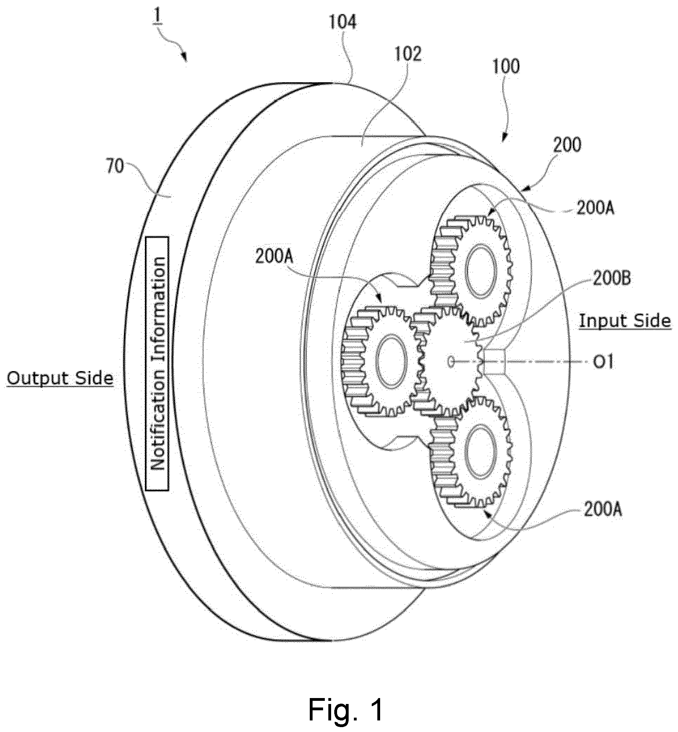

Fig. 1 is a perspective view of a speed reducer 1 relating to a first embodiment. The speed reducer 1 is provided at a connection portion (joint portion) between arms that are rotatably connected together in industrial robots, for example. The speed reducer 1 reduces a drive torque inputted thereto from a motor serving as a power source (not shown) and outputs the reduced torque.

The speed reducer 1 includes a casing 100 and a speed reduction mechanism 200. The casing 100 includes a body portion 102 and a flange portion 104. The flange portion 104 is shaped such that it extends outward in the radial direction from the body portion 102. In the description of the embodiment, the simple term "axial direction" refers to the direction extending along the axis O1 of the body portion 102. The term "radial direction" refers to the direction intersecting the axis O1 when viewed in the axial direction. The term "circumferential direction" refers to the direction extending around the axis O1. The term "input side" refers to the side of the speed reducer 1 connected to a drive source. The term "output side" refers to the side of the speed reducer 1 connected to a mechanical part such as an arm receiving the output from the speed reducer 1. The drive source is an example of a first member, and the mechanical part such as an arm is an example of a second member. The speed reducer 1 is configured to work between the first member and the second member and to change the number of rotations at a predetermined ratio and transmit a resulting driving force.

The body portion 102 is an example of a first cylinder. The body portion 102 is shaped like a cylinder extending along the axis O1. The body portion 102 is open at the input side. In the opening of the body portion 102, the speed reduction mechanism 200 is housed rotatably. The body portion 102 has at the output side the flange portion 104 integrated therewith. The speed reducer 1 has, on the input side thereof, a plurality of (for example, three) transmission gears 200A and a single input gear 200B such that the gears are exposed.

To the flange portion 104, a display unit 70 is attached. The display unit 70 is a display device shaped such that it can be attached onto the surface of the casing 100. The display unit 70 is, for example, a display device with a thickness of approximately 1 mm using an ultra-thin organic EL display or a sheet-type LED lighting device. The display unit 70 may be formed on the entire circumferential surface of the flange portion 104 but acceptable as long as it is formed on at least part of the circumferential surface, for example. The circumferential surface is the surface of the flange portion 104 that is exposed in the radial direction.

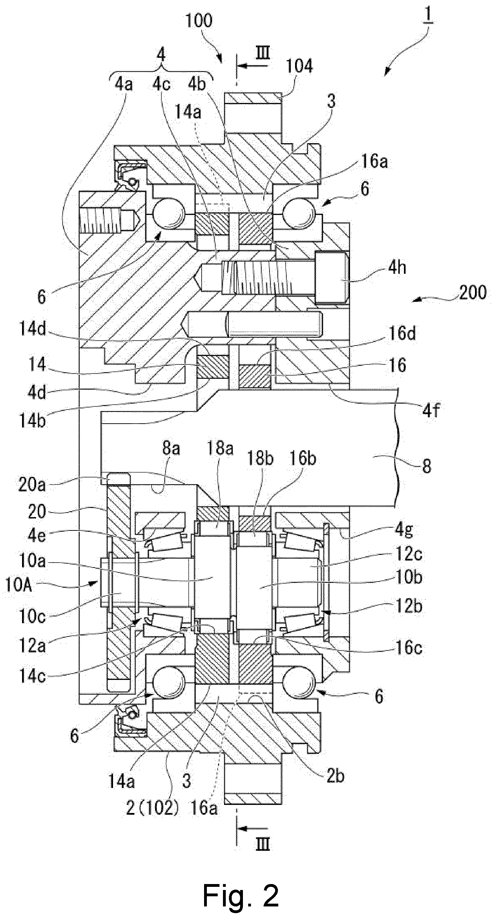

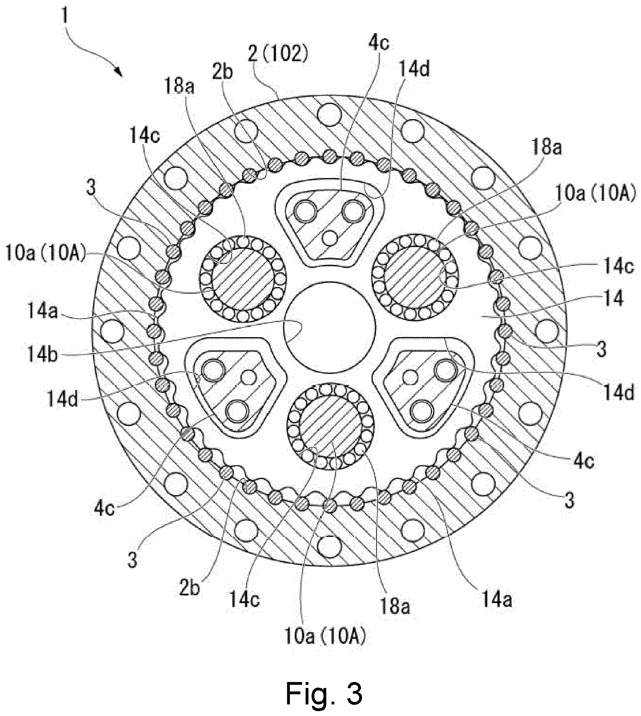

Fig. 2 is a sectional view showing the configuration of the speed reducer 1 relating to the first embodiment. Fig. 3 is a sectional view taken along the line III-III in Fig. 2. In the speed reducer 1 relating to the present embodiment, the input gear 200B corresponds to an input shaft 8. As the input shaft 8 is rotated, a crankshaft 10A is resultantly rotated. The crankshaft 10A has eccentric portions 10a and 10b. In response to the movement of the eccentric portions 10a and 10b, first and second oscillating gears 14 and 16 oscillatorily rotate. In this way, the speed reducer 1 can reduce rotation input thereto and output the reduced rotation.

As shown in Figs. 2 and 3, the speed reducer 1 includes an external cylinder 2 corresponding to the body portion 102 (the first cylinder), a carrier 4, which is an example second cylinder, the input shaft 8, a plurality of (for example, three) crankshafts 10A, the first oscillating gear 14, the second oscillating gear 16, and a plurality of (for example, three) transmission gears 20. The transmission gears 20 correspond to the transmission gears 200A in Fig. 1.

The external cylinder 2 is substantially shaped like a circular cylinder and constitutes the outer surface of the speed reducer 1. The external cylinder 2 has on the inner circumferential surface thereof a plurality of pin grooves 2b. The pin grooves 2b extend in the axial direction of the external cylinder 2. The pin grooves 2b have a semicircular sectional shape when cut along a plane orthogonal to the axial direction. The pin grooves 2b are arranged at equal intervals and next to each other in the circumferential direction on the inner circumferential surface of the external cylinder 2.

The external cylinder 2 has a plurality of internal tooth pins 3. The internal tooth pins 3 are attached in the pin grooves 2b. More specifically, the internal-tooth pins 3 are fitted in the corresponding pin grooves 2b and retained therein such that they extend in the axial direction of the external cylinder 2. In this manner, the internal tooth pins 3 are arranged on the external cylinder 2 next to each other in the circumferential direction and at equal intervals. The internal tooth pins 3 mesh with first external teeth 14a of the first oscillating gear 14 and second external teeth 16a of the second oscillating gear 16.

The carrier 4 is housed within the external cylinder 2 while being aligned with the external cylinder 2. The carrier 4 is rotatable relative to the external cylinder 2 (casing 100) about the same axis. More specifically, while being positioned inside the external cylinder 2 in the radial direction, the carrier 4 is supported via a pair of main bearings 6 such that the carrier 4 is rotatable relative to the external cylinder 2. The main bearings 6 are spaced apart from each other in the axial direction.

The carrier 4 includes a base portion and an end plate 4b. The base portion includes a base plate 4a and a plurality of (for example, three) shaft portions 4c.

The base plate 4a is arranged within the external cylinder 2 near one of the ends of the external cylinder 2 in the axial direction. The base plate 4a has a circular through-hole 4d at the center thereof in the radial direction. Around the through hole 4d, a plurality of (for example, three) crankshaft mounting holes 4e (hereinafter referred to simply as "the mounting holes 4e") are formed next to each other at equal intervals in the circumferential direction centered on the through hole 4d.

The end plate 4b is spaced away from the base plate 4a in the axial direction and positioned in the external cylinder 2 near the other end of the external cylinder 2 in the axial direction. The end plate 4b has a through-hole 4f at the center thereof in the radial direction. Around the through hole 4f, a plurality of (for example, three) crankshaft mounting holes 4g (hereinafter referred to simply as "the mounting holes 4g") are formed next to each other at equal intervals in the circumferential direction centered around the through hole 4f. The mounting holes 4g are positioned such that they face the mounting holes 4e formed in the base plate 4a in the axial direction. Inside the external cylinder 2, a closed space is defined by the inner surfaces of the end and base plates 4b and 4a and the inner circumferential surface of the external cylinder 2.

The three shaft portions 4c are integrated with the base plate 4a and extend linearly from the principal (inner) surface of the base plate 4a toward the end plate 4b. The three shaft portions 4c are arranged next to each other in the circumferential direction at equal intervals (see Fig. 3). The shaft portions 4c are fastened to the end plate 4b with bolts 4h (see Fig. 2). In this manner, the base plate 4a, shaft portions 4c and end plate 4b together constitute a single integral piece.

The input shaft 8 serves as an input part for receiving a driving force input thereto from a driving motor (not shown). The input shaft 8 runs through the through hole 4f formed in the end plate 4b and the through hole 4d formed in the base plate 4a. The input shaft 8 is arranged such that its central axis is aligned with the central axis of the external cylinder 2 and the carrier 4. The input shaft 8 is rotatable about an axis. An input gear 8a is provided on the outer circumferential surface of the front end of the input shaft 8.

The three crankshafts 10A are arranged, within the external cylinder 2, next to each other in the circumferential direction at equal intervals around the input shaft 8 (see Fig. 3). Each crankshaft 10A is supported by first and second crank bearings 12a and 12b such that it is rotatable about an axis relative to the carrier 4 (see Fig. 2). More specifically, the first crank bearing 12a is mounted on a portion of each crankshaft 10A that is at a predetermined distance from one of the ends of the crankshaft 10A in the axial direction inwardly. The first crank bearings 12a are mounted in the mounting holes 4e in the base plate 4a. The second crank bearing 12b is attached to the other end of each crankshaft 410 in the axial direction. The second crank bearings 12b are mounted in the mounting holes 4g in the end plate 4b. In this manner, the crankshafts 10A are rotatably supported by the base plate 4a and the end plate 4b. In the following description, the first and second crank bearings 12a and 12b may be simply referred to as the crank bearings 12a and 12b.

Each crankshaft 10A includes a shaft body 12c, and a first eccentric portion 10a and a second eccentric portion 10b formed integrally with the shaft body 12c. The first and second eccentric portions 10a and 10b are provided on the shaft body 12c next to each other in the axial direction between the crank bearings 12a and 12b. The first and second eccentric portions 10a and 10b are shaped like a circular cylinder. The first and second eccentric portions 10a and 10b project radially outward from the shaft body 12c while being eccentrically arranged relative to the central axis of the shaft body 12c. The first and second eccentric portions 10a and 10b are offset from the central axis by predetermined amounts, while being arranged with a phase difference of a predetermined angle therebetween.

One of the ends of each crankshaft 10A, specifically, the portion mounted in the mounting hole 4e in the base plate 4a has a mating portion 10c to which the transmission gear 20 is mounted. The mating portion 10c is located outside the mounting hole 4e in the axial direction. The speed reducer 1 relating to the present embodiment is not limited to the case shown in Fig. 2. For example, the crankshafts 10A may be oriented oppositely in the axial direction. In this case, the mating portions 10c may be arranged outside the mounting holes 4g formed in the end plate 4b in the axial direction. In other words, the speed reducer 1 can be configured in a reverse assembly.

The first oscillating gear 14 is disposed in the closed space within the external cylinder 2. The first oscillating gear 14 is mounted onto the first eccentric portion 10a of each crankshaft 10A via a first roller bearing 18a. As each crankshaft 10A rotates, the first eccentric portion 10a eccentrically rotates. The eccentric rotation results in the first oscillating gear 14 oscillatorily rotating while meshing with the internal tooth pins 3.

The first oscillating gear 14 is sized such that it is slightly smaller than the inner diameter of the external cylinder 2. The first oscillating gear 14 has first external teeth 14a, a central through hole 14b, a plurality of (for example, three) first eccentric portion insertion holes 14c, and a plurality of (for example, three) shaft portion insertion holes 14d. The first external teeth 14a are shaped like smooth and continuous waves along the entire circumference of the first oscillating gear 14.

The central through hole 14b is formed at the center of the first oscillating gear 14 in the radial direction. The central through hole 14b receives therein the input shaft 8 with a clearance therebetween.

The three first eccentric portion insertion holes 14c are arranged around the central through hole 14b and arranged at equal intervals next to each other in the circumferential direction centered on the central through hole 14b. The first eccentric portions 10a of the crankshafts 10A are inserted in the first eccentric portion insertion holes 14c, via the first rolling bearings 18a interposed therebetween. The first roller bearings 18a are located between the inner wall of the first eccentric portion insertion holes 14c and the first eccentric portions 10a.

The three shaft portion insertion holes 14d are provided in the first oscillating gear 14 and arranged at equal intervals next to each other in the circumferential direction around the central through hole 14b. The shaft portion insertion holes 14d are positioned between the first eccentric portion insertion holes 14c in the circumferential direction. The shaft portion insertion holes 14d receive therein the corresponding shaft portions 4c with a clearance therebetween.

The second oscillating gear 16 is disposed in the closed space inside the external cylinder 2. The second oscillating gear 16 is mounted onto the second eccentric portion 10b of each crankshaft 10A via a second roller bearing 18b. The first and second oscillating gears 14 and 16 are next to each other in the axial direction correspondingly to the first and second eccentric portions 10a and 10b. As each crankshaft 10A rotates, the second eccentric portion 10b eccentrically rotates. The eccentric rotation results in the second oscillating gear 16 oscillatorily rotating while meshing with the internal tooth pins 3.

The second oscillating gear 16 is sized such that it is slightly smaller than the inner diameter of the external cylinder 2 and configured in the same manner as the first oscillating gear 14. In other words, the second oscillating gear 16 has second external teeth 16a, a central through hole 16b, a plurality of (for example, three) second eccentric portion insertion holes 16c, and a plurality of (for example, three) shaft portion insertion holes 16d. These constituents are designed in the same manner as the first external teeth 14a, the central through hole 14b, the first eccentric portion insertion holes 14c, and the shaft portion insertion holes 14d of the first oscillating gear 14. The second eccentric portions 10b of the crankshafts 10A are inserted in the second eccentric portion insertion holes 16c, via the second rolling bearings 18b interposed therebetween. The second roller bearings 18b are located between the inner wall of the second eccentric portion insertion holes 16c and the second eccentric portions 10b.

Each transmission gear 20 transmits the rotation of the input gear 8a to the corresponding one of the crankshafts 10A. Each transmission gear 20 is fitted onto the mating portion 10c of the shaft body 12c of the corresponding crankshaft 10A. Each transmission gear 20 is rotatable integrally with the crankshaft 10A around the same axis as the crankshaft 10A. Each transmission gear 20 has external teeth 20a meshing with the input gear 8a.

### <Functional Configuration of Speed Reducer>

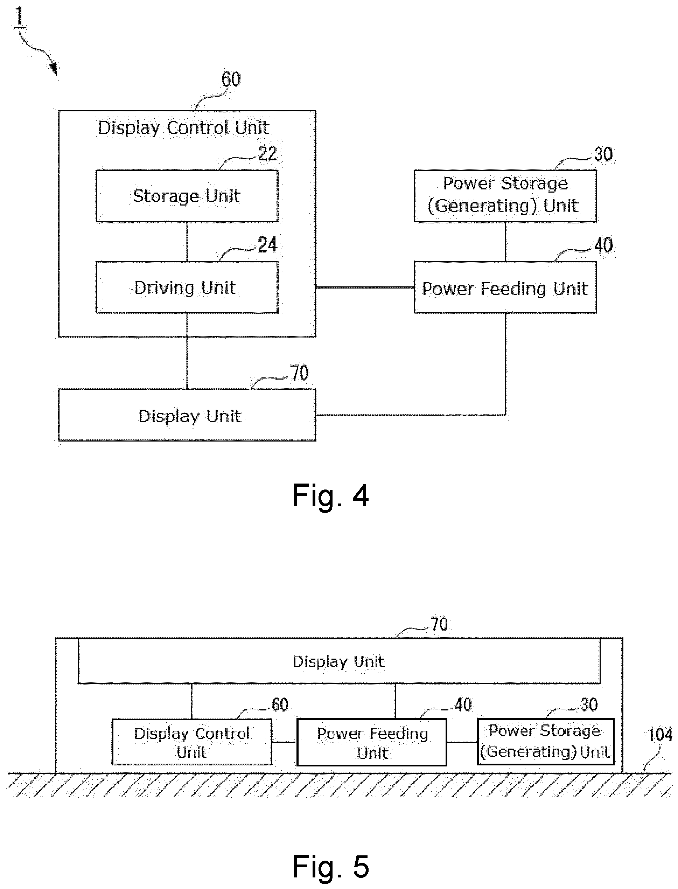

Fig. 4 is a block diagram showing an example functional configuration of the speed reducer 1 relating to the first embodiment. The speed reducer 1 includes a display unit 70, a display control unit 60, a power storage unit 30 and a power feeding unit 40. The display unit 70 is configured to display notification information. The notification information is, for example, information notified to a user of the speed reducer 1 or a mechanism using the speed reducer 1 when seen by the user. The notification information is, for example, static information indicating the manufacturer or advertisement of the speed reducer 1, or dynamic information indicating the state of the speed reducer 1 or a mechanism connected to the speed reducer 1. The static information is information that does not change over a period of time during which the speed reducer 1 is in use. The dynamic information is information that changes over a period of time during which the speed reducer 1 is in use. For example, the dynamic information is information related to the temperature of the speed reducer 1, the load on the speed reducer 1, the temperature and load of the mechanism connected to the speed reducer 1, and the distance between the speed reducer 1 and the target object. The target object is an object that is placed in the vicinity of the speed reducer 1, such as a person. Advertisement information is, for example, information regarding the manufacturer's sales promotion (e.g., information about an exhibition), information about a new type of the speed reducer 1, or amusing videos.

The display control unit 60 includes a storage unit 22 and a drive unit 24. The storage unit 22 is, for example, RAM or flash memory, and configured to store notification information. The drive unit 24 is configured to read the notification information stored in the storage unit 22 and sends to the display unit 70 a signal based on the notification information, so that the display unit 70 is operated. When the display unit 70 is operated, for example, the display unit 70 starts or stops displaying the notification information, changes the contents of the notification information, changes the manner such as the color and size in which the notification information is displayed, and changes where the notification information is displayed.

The power storage unit 30 includes a battery for storing self-generated power or power supplied thereto from outside the speed reducer 1. The battery can be a capacitor (including an electric double-layer capacitor) or rechargeable battery (e.g., a lithium-ion battery, a solid-state lithium-ion battery, an air battery, etc.). The power feeding unit 40 is configured to feed the power stored in the power storage unit 30 to the display unit 70 and the display control unit 60.

When configured to generate power on its own, the power storage unit 30 converts the energy present in the environment surrounding the speed reducer 1 (the ambient environment) into electric power (so-called energy harvesting). The power storage unit 30 feeds power to be used to operate the display unit 70, the display control unit 60, and the power feeding unit 40. The power storage unit 30 may generate power based on at least one selected from the group consisting of the temperature, the humidity, the radio waves such as Wi-Fi, and the electromagnetic waves, vibrations, sound, light, and fluid or powder flows (wind, waves, etc.) originating from the surroundings of the speed reducer 1. The electromagnetic waves include radiation and cosmic rays, as well as electromagnetic noise from electric motors and the like. The sound includes ultrasonic waves. The light includes visible light, infrared light, and ultraviolet light. When configured to generate power on its own, the power storage unit 30 is configured to be capable of efficiently absorbing such energy. For example, when configured to absorb light to generate power, the power storage unit 30 is attached onto the exposed surface of the speed reducer 1.

Fig. 5 shows, for example, how the display unit 70 and other units are mounted in the first embodiment. The display unit 70 is placed on the exterior of the speed reducer 1, so that the notification information is externally exposed through the surface of the speed reducer 1. The display control unit 60, power storage unit 30, and power feeding unit 40 are interposed between the display unit 70 and the surface of the flange portion 104.

The speed reducer 1 relating to the present embodiment includes the casing 100 and the carrier 4 rotatable relative to the casing 100. The speed reducer 1 further includes the speed reduction mechanism 200 and the display unit 70. The speed reduction mechanism 200 is provided in the casing 100 and configured to reduce the rotation input thereto from a drive source and outputs the reduced rotation, and the display unit 70 is shaped such that it can be attached onto the surface of the casing 100 and configured to display the notification information. Since the above-described speed reducer 1 can display the notification information on its surface, the speed reducer 1 can be easily checked by observing its appearance.

The speed reducer 1 relating to the present embodiment includes the speed reduction mechanism 200 and the display unit 70 for displaying the notification information. The speed reduction mechanism 200 is a gear device for changing the number of rotations at a predetermined ratio and transmitting a driving force between a first member and a second member. The speed reduction mechanism 200 includes an eccentric portion (10a, 10b), an oscillating gear (14, 16) having an insertion hole (14c, 16c) through which the eccentric portion is inserted and teeth (14a, 16a), a first cylinder (2, 102) mountable on one of the first and second members, and a second cylinder (4) mountable on the other of the first and second members. The first cylinder (2, 102) has internal teeth (3) meshing with the teeth of the oscillating gear. The second cylinder (4) is positioned inside the first cylinder in the radial direction while holding the oscillating gear. The first and second cylinders are concentrically rotatable relative to each other when acted upon by oscillation of the oscillating gear caused by rotation of the eccentric portion. The display unit (70) is shaped such that it can be attached onto the surface of the casing 100. Since the speed reducer 1 has the above-described features, the notification information is displayed on the surface of the speed reducer 1. Accordingly, the speed reducer 1 can be easily checked by observing its appearance.

In the present embodiment, the display unit 70 is configured to output information. The present embodiment, however, is not limited to such. For example, a speaker for outputting the information using sound, a projector for projecting the information using light, or other output units can be used as long as they can stimulate the perception of the user.

In the speed reducer 1 relating to the present embodiment, the display unit 70 may be formed on at least part of the surface of the casing 100 so as to extend circumferentially along the surface of the casing 100. Furthermore, the casing 100 may include the body portion 102 and the flange portion 104. The body portion 102 is shaped cylindrically, and the flange portion 104 is shaped such that the flange portion 104 projects outwardly in the radial direction from the body portion 102. The display unit 70 may be formed on at least part of the surface of the flange portion 104. According to the speed reducer 1 described above, the notification information can be displayed on the flange portion 104, which constitutes the external edge of the speed reducer 1. Accordingly, the speed reducer 1 can be easily checked by observing its appearance.

According to the speed reducer 1 of the present embodiment, the notification information is related to the manufacturer or advertisement for the speed reducer 1. Accordingly, the speed reducer 1 allows a user to easily check the manufacturer or advertisement for the speed reducer 1 by observing its appearance. Furthermore, the speed reducer 1 can save the user from confusing the manufacturer of the speed reducer 1 with other speed reducer manufacturers.

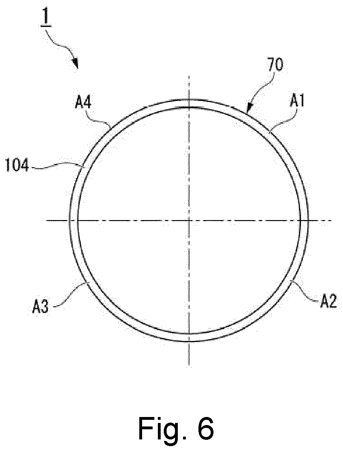

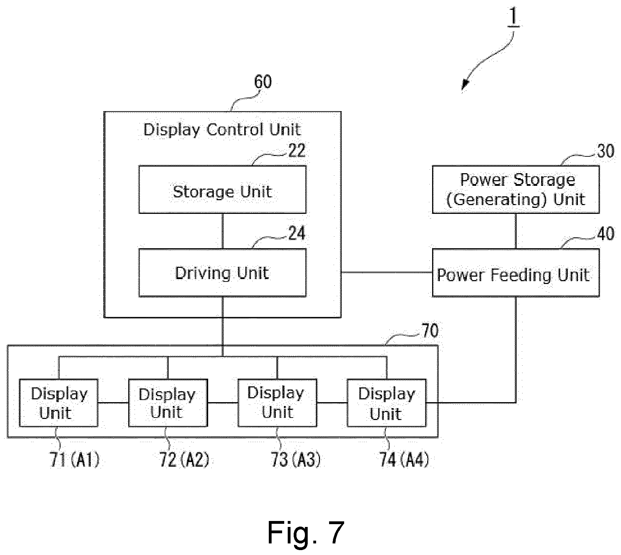

Fig. 6 is a front view showing the flange portion 104 of the speed reducer 1 relating to the first embodiment in the axial direction. Fig. 7 is a block diagram showing another example of the speed reducer 1 relating to the first embodiment. The display unit 70 is formed over the entire circumferential surface of the flange portion 104 and is divided into a plurality of display areas A1, A2, A3 and A4. The display areas A1, A2, A3 and A4 are obtained by dividing the flange portion 104 into four regions of the same area in the circumferential direction. The display unit 70 includes a display unit 71 corresponding to the display area A1, a display unit 72 corresponding to the display area A2, a display unit 73 corresponding to the display area A3, and a display unit 74 corresponding to the display area A4. The display unit 70 can control what is displayed on the display units 71 to 74 under the control of the drive unit 24. Controlling what is displayed on the display units 71 to 74 includes, for example, controlling the respective display units 71 to 74 to start or suspend displaying the notification information, controlling whether or not the notification information is displayed on the respective display units 71 to 74, controlling the display units 71 to 74 to display the notification information of different contents, controlling the display units 71 to 74 to display the notification information in different manners such as different colors and sizes, and controlling the display units 71 to 74 to display the notification information at different positions.

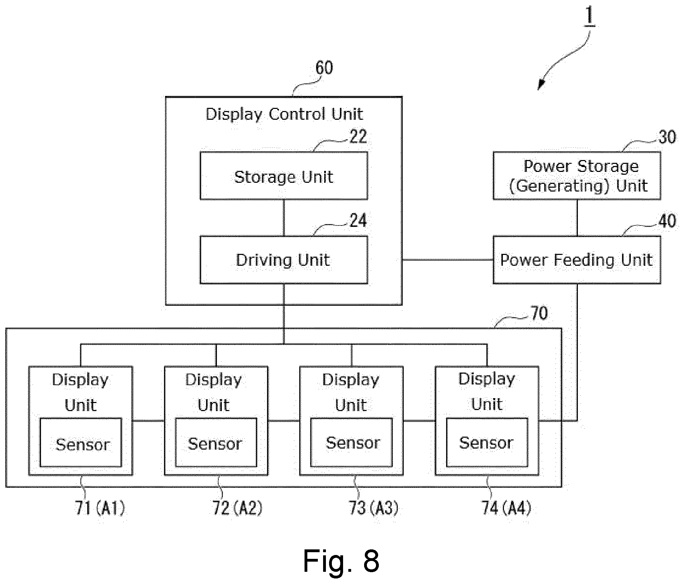

Fig. 8 is a block diagram showing another example of the speed reducer 1 relating to the first embodiment. The speed reducer 1 may control what is displayed on the display units 71 to 74 based on sensor inputs, or based on user inputs. The display units 71 to 74 may have sensors corresponding to the display areas A1, A2, A3 and A4. The sensors are, for example, configured to detect how or whether the user touches the corresponding display areas or how bright the corresponding display areas are. The display unit 70 may control the display units 71 to 74 such that the notification information is displayed on the display area where the user's touch is detected but not displayed on the display area where the user's touch is not detected. The display unit 70 may control the display units 71 to 74 such that the notification information is displayed in any of the display areas if the sensors detect that the display area is brighter than a threshold value but not displayed in any of the display areas if the sensors detect that the display area is not brighter than the threshold value.

Here, the display areas may be provided respectively on a plurality of speed reducers 1. For example, an industrial robot or the like may have a pair of rotatably coupled arms and the arms have a plurality of joints. In this case, the joints may each have the speed reducer 1, and each speed reducer 1 may have the display unit 70. Each speed reducer 1 may perform short-range wireless communication with the display control unit 60 so that the speed reducers 1 may collaborate with each other when displaying the notification information.

According to the speed reducer 1 of the present embodiment, the display unit 70 can change the contents of the notification information. This allows the speed reducer 1 to change what the user is notified of. Furthermore, according to the present embodiment, the display unit 70 can change which one of the display areas is to display the notification information. This makes it possible to display the notification information in the display area exposed to the user, for example. Accordingly, the speed reducer 1 can be easily checked by observing its appearance.

Since the speed reducer 1 of the present embodiment includes a power generation unit (power storage unit 30) for generating power used to operate the display unit 70, no additional wirings are needed to attach the display unit 70 to the speed reducer 1.

### <Second Embodiment>

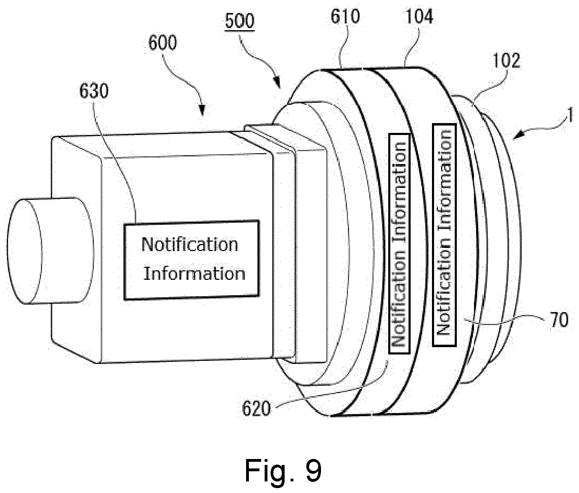

The following describes a second embodiment. In the speed reducer 1 of the second embodiment, the display unit 70 is formed on the drive source or on an external mechanism such as an arm to which the rotation output from the carrier 4 is input. The external mechanism is connected to the carrier (transmitting unit) 4, but the present embodiment is not limited to such. For example, if the carrier 4 is fixedly attached to the flange portion 104, it may be the rotation of the flange portion 104 that is transmitted to the external mechanism. Fig. 9 is a perspective view showing an example of an actuator 500 including the speed reducer 1 relating to the second embodiment and a motor 600 serving as the drive source. The motor 600 is connected to the speed reducer 1. The speed reducer 1 outputs and transmits the rotation of the motor 600. The motor 600 includes a casing 610. A display unit 620 is formed on a portion of the casing 610 that is connected to the speed reducer 1. A display unit 630 is formed on the side surface of the casing 610.

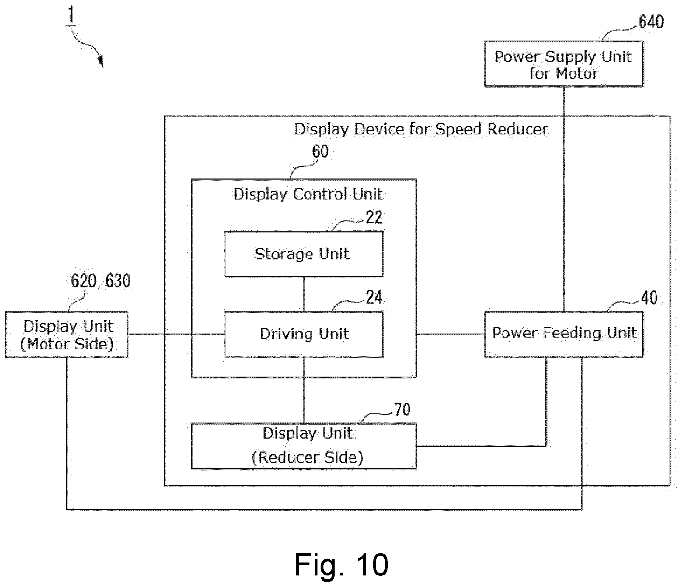

Fig. 10 is a block diagram showing the functional configuration of the speed reducer 1 relating to the second embodiment. The power feeding unit 40 feeds power to be used to operate display units 620 and 630. The display control unit 60 drives the display units 620 and 630 on the motor 600, so that the display units 620 and 630 can display the notification information. The power feeding unit 40 may include the power storage unit 30, but the present embodiment is not limited to such. For example, the power feeding unit 40 may distribute power from a motor power supply unit 640 to the display unit 70, the display control unit 60, and the display units 620 and 630. The motor power supply unit 640 serves as a power supply unit for controlling the power used to drive the motor 600.

According to the second embodiment, in addition to the display unit 70 of the speed reducer 1, the display units 620 and 630 can be provided on the motor 600 or arm connected to the speed reducer 1. Accordingly, the second embodiment can provide an increased display area. As configured in the above manner, the speed reducer 1 relating to the second embodiment and the motor 600 can be more easily checked by observing their appearance.

According to the second embodiment, the display unit 70 can be operated using the power fed from the motor power supply unit 640, which is configured to control the driving power for the motor 600. The second embodiment thus can eliminate the need of providing power generators and additional power sources for the display unit 70.

The display control unit 60 may control what is displayed on the display units 70, 620 and 630. The display control unit 60 may change whether or not the notification information is displayed, the contents of the notification information based on, for example, where the display units are positioned, how bright the display units are, and how the user touches the display units. For example, the display control unit 60 may control the display units to display red when the temperature of the speed reducer 1 or motor 600 is higher than a predetermined value and to display blue when the temperature of the speed reducer 1 or motor 600 is lower than a predetermined value. Furthermore, the display control unit 60 may control the display units to display different colors in predetermined units (for example, in 10-degree increments).

### <Third Embodiment

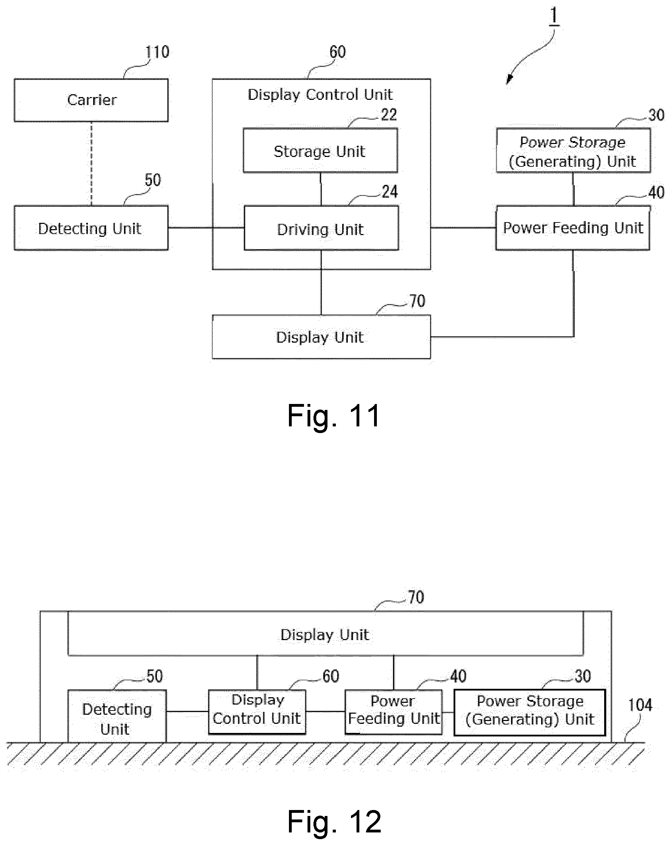

The following describes a third embodiment. In the third embodiment, the display unit 70 of the speed reducer 1 is configured to display, as the notification information, information related to the temperature and load on the speed reducer 1. Fig. 11 is a block diagram showing an example configuration of the speed reducer 1 relating to the third embodiment. The speed reducer 1 relating to the third embodiment has a detecting unit 50 for detecting information related to the temperature or load on the speed reducer 1.

Fig. 12 shows, for example, how the display unit 70 and other units are mounted in the third embodiment. The detecting unit 50 is provided on the flange portion 104 of the speed reducer 1 and is a temperature sensor for detecting the temperature of the flange portion 104. The detecting unit 50 sends a signal corresponding to the detected temperature to the drive unit 24. The drive unit 24 operates the display unit 70 based on the signal sent thereto, so that the display unit 70 can display the temperature of the speed reducer 1. The detecting unit 50 may be a vibration sensor for detecting whether the flange portion 104 vibrates. The vibration of the flange portion 104 is indicative of the load on the speed reducer 1, for example. The detecting unit 50 sends a signal corresponding to the detected vibration to the drive unit 24. The drive unit 24 operates the display unit 70 based on the signal sent thereto, so that the display unit 70 can display the load on the speed reducer 1. The drive unit 24 may control the display unit 70 to display the temperature and load on the speed reducer 1 in numerical values. The present embodiment, however, is not limited to such, and the temperature and load on the speed reducer 1 may be displayed in colors. For example, the display control unit 60 may control the display unit 70 to display red when the load on the speed reducer 1 or motor 600 is higher than a predetermined value and to display blue when the load on the speed reducer 1 or motor 600 is lower than a predetermined value. In addition, the display control unit 60 may control the display unit 70 to display yellow when the load on the speed reducer 1 or motor 600 is within the range between these predetermined values or to display different colors depending on the ranges. Furthermore, the display control unit 60 may convert the load on the speed reducer 1 and motor 600 into a threat level, and different threat levels may be displayed in different colors. Furthermore, the display control unit 60 may control the display unit 70 to display the likelihood of failures determined by the temperature and load on the speed reducer 1 and motor 600. In this case, the display control unit 60 may control the display unit 70 to change the color indicative of the likelihood of failures in the order of blue, yellow and green as the likelihood of failures increases.

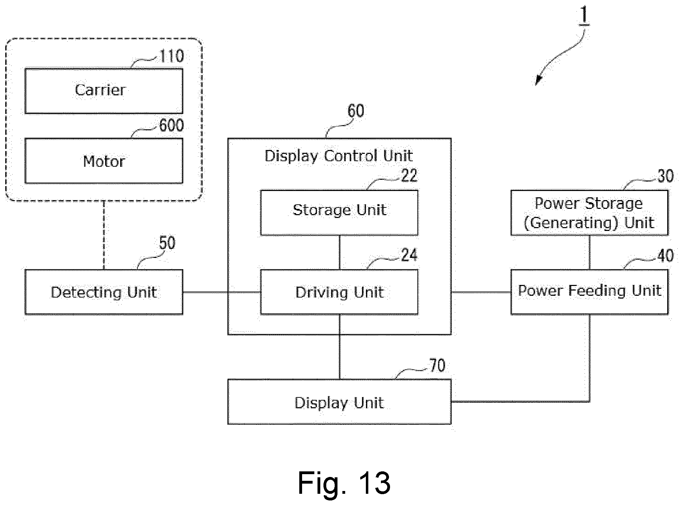

Fig. 13 is a block diagram showing an example configuration of the speed reducer 1 relating to the third embodiment. According to the speed reducer 1 relating to the third embodiment, the detecting unit 50 detects information related to the temperature and load on the motor 600. In the speed reducer 1, the display unit 70 may display, as the notification information, information related to the temperature and load on the motor 600, which is an external mechanism connected to the speed reducer 1. Furthermore, the speed reducer 1 may display notification information relating to the motor 600, in addition to the notification information related to the speed reducer 1. In addition, the speed reducer 1 may display notification information related to the motor 600, in place of the notification information related to the speed reducer 1.

Furthermore, the detecting unit 50 may detect information regarding the distance between the speed reducer 1 and a target object. In the speed reducer 1, the display unit 70 may display, as the notification information, information related to the distance between the speed reducer 1 and the target object. In this case, the detecting unit 50 may be a distance or proximity sensor such as a camera device for producing information related to the distance. The speed reducer 1 may display the distance detected by the distance sensor, for example. In this case, when the distance sensor detects a distance equal to or less than a predetermined value, the speed reducer 1 may display information related to warning or output sound. For example, the speed reducer 1 may display information related to warning or output sound when a proximity sensor detects a person. Any distance sensors can be used as long as they can measure the distance between the speed reducer 1 and the target object. For example, the distance sensor may use infrared rays, ultrasonic waves, laser or any known techniques. Any proximity sensors can be used as long as they can detect a person is within a predetermined range from the speed reducer 1. For example, any known proximity sensors such as induction-, capacitance- and magnetic-type proximity sensors can be used.

The speed reducer 1 relating to the third embodiment can display information related to the temperature and load on the speed reducer 1, and information related to the temperature and load on the external mechanism such as the motor 600 and arms. The speed reducer 1 can be thus easily checked and allow the user to check information related to its temperature and load. Furthermore, the speed reducer 1 relating to the third embodiment can display the information related to the distance between the speed reducer 1 and the target object. Accordingly, the speed reducer 1 can be further easily checked by observing its appearance.

### <Fourth Embodiment>

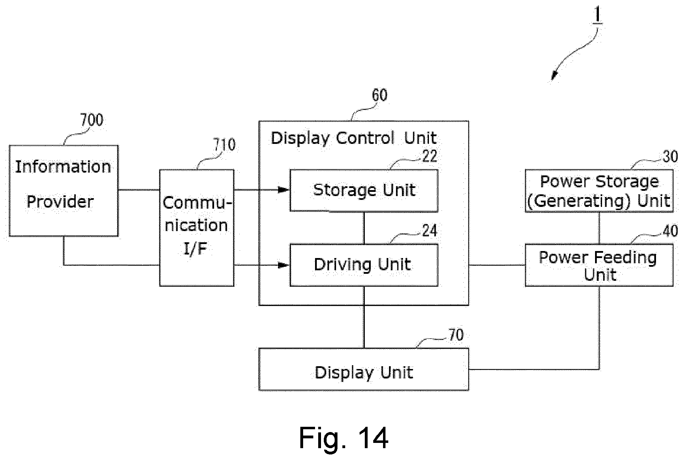

The following describes a fourth embodiment. Fig. 14 is a block diagram showing an example configuration of a speed reducer 1 relating to a fourth embodiment. The speed reducer 1 relating to the fourth embodiment is communicatively connected to an information provider 700 via, for example, a communication network. The speed reducer 1 includes a communication interface (I/F) 710 for communicating with the information provider 700. The information provider 700 is an information server managed by the manufacturer of the speed reducer 1, the maintenance company of the speed reducer 1, or the purchaser or user of the speed reducer 1. The communication interface 710 is a Network Interface Card (NIC) or wireless communication module. The communication network is, for example, the Internet, Wide Area Network (WAN), or Local Area Network (LAN), cellular network, etc. The speed reducer 1 may update the notification information stored in the storage unit 22 based on instructions sent from the information provider. Furthermore, the speed reducer 1 may control the drive unit 24 to change the notification information to be displayed, based on instructions sent from the information provider.

Furthermore, the speed reducer 1 relating to the fourth embodiment may transmit, via the communication interface 710, information related to the temperature and load on the speed reducer 1 and motor 600 to the information provider 700. In the speed reducer 1, the storage unit 22 may store notification information corresponding to the information related to the temperature and load on the speed reducer 1 and the motor 600 sent from the information provider 700, and the display unit 70 may display the stored notification information. In addition, the speed reducer 1 can send the information related to the temperature and load on the speed reducer 1 and motor 600 transmitted from the information provider 700, to the terminal owned by the manufacturer of the speed reducer 1, the maintenance company of the speed reducer 1, or the purchaser or user of the speed reducer 1 for the purposes of feedback.

In the above, the embodiments of the present invention have been described in detail, but the present invention is not limited to the above and may encompass a variety of design modifications within the purport of the present invention.

The present invention also relates to the following clause:
A speed reducer including:
a first cylinder having a body portion and a flange portion, the body portion being shaped cylindrically, the flange portion being shaped such that the flange portion projects outward in a radial direction from the body portion;
a speed reduction mechanism for changing the number of rotations at a predetermined ratio and transmitting a driving force between a first member and a second member, the speed reduction mechanism being a gear device; and
a display unit attached onto at least part of a surface of the flange portion so as to extend circumferentially along the surface of the flange portion , the display unit being configured to display manufacturer or advertising information for the speed reducer,
wherein the speed reduction mechanism includes:
   an eccentric portion; and
   an oscillating gear having an insertion hole into which the eccentric portion is inserted, the oscillating gear having teeth,
wherein the first cylinder is mountable on one of the first and second members and has internal teeth meshing with the teeth of the oscillating gear,
wherein the speed reduction mechanism further includes
   a second cylinder mountable on the other of the first and second members,
   wherein the second cylinder is positioned inside the first cylinder in the radial direction while holding the oscillating gear, and
   wherein the first and second cylinders are concentrically rotatable relative to each other when acted upon by oscillation of the oscillating gear caused by rotation of the eccentric portion.

### LIST OF REFERENCE NUMBERS

1...speed reducer
70,620,630...display unit
60...display control unit
22...storage unit
24...driving unit
30...power storage unit
40...power feeding unit
100...casing
102...body portion
104...flange portion
110...carrier
600...motor
640...motor power supply unit
700...information provider
710...communication interface

## Claims

1. A speed reducer (1) comprising:
a casing (100);
a speed reduction mechanism (200) provided in the casing (100), the speed reduction mechanism (200) being configured to reduce rotation input thereto from a drive source (600) and output the reduced rotation; and
a display unit (70) shaped such that the display unit (70) is attached onto a surface of the casing (100), the display unit (70) being configured to display notification information,
wherein the speed reduction mechanism (200) includes a transmitting unit rotatably provided on the casing (100).

2. The speed reducer (1) of claim 1, wherein the display unit (70) is formed on at least part of the surface of the casing (100) so as to extend circumferentially along the surface of the casing (100).

3. The speed reducer (1) of one of claims 1 and 2,
wherein the casing (100) includes:
a body portion (102) having a cylindrical shape; and
a flange portion (104) shaped such that the flange portion (104) projects outward in a radial direction from the body portion (102), and
wherein the display unit (70) is formed on at least part of a surface of the flange portion (104).

4. The speed reducer (1) of any one of claims 1 to 3, wherein the display unit (70) is formed on the drive source (600) or on an external mechanism to which rotation output from the transmitting unit is input.

5. The speed reducer (1) of any one of claims 1 to 4, wherein the notification information is related to a manufacturer or advertisement of the speed reducer (1).

6. The speed reducer (1) of any one of claims 1 to 4, wherein the notification information is related to a temperature of the speed reducer (1).

7. The speed reducer (1) of any one of claims 1 to 4, wherein the notification information is related to a load on the speed reducer (1).

8. The speed reducer (1) of claim 4, wherein the notification information is related to a temperature of the external mechanism.

9. The speed reducer (1) of claim 4, wherein the notification information is related to a load on the external mechanism.

10. The speed reducer (1) of claim 4, wherein the notification information is related to a distance between the speed reducer (1) and a target object.

11. The speed reducer (1) of any one of claims 1 to 9, wherein the display unit (70) changes contents of the notification information.

12. The speed reducer (1) of any one of claims 1 to 9, wherein the display unit (70) changes regions in which the notification information is displayed.

13. The speed reducer (1) of any one of claims 1 to 11, comprising a power generating unit (30) for generating power to be used to operate the display unit (70).

14. The speed reducer (1) of any one of claims 1 to 11, wherein the display unit (70) is operated using power from a power supply unit (640) for controlling power to drive the drive source (600).

15. A speed reducer (1) comprising:
a speed reduction mechanism (200) for changing the number of rotations at a predetermined ratio and transmitting a driving force between a first member and a second member, the speed reduction mechanism (200) being a gear device; and
a display unit (70) for displaying notification information,
wherein the speed reduction mechanism (200) includes:
an eccentric portion (10a, 10b);
an oscillating gear (14, 16) having an insertion hole (14c, 16c) into which the eccentric portion (10a, 10b) is inserted, the oscillating gear (14, 16) having teeth (14a, 16a);
a first cylinder (2, 102) mountable on one of the first and second members; and
a second cylinder (4) mountable on the other of the first and second members,
wherein the first cylinder (2, 102) has internal teeth (3) meshing with the teeth (14a, 16a) of the oscillating gear (14, 16),
wherein the second cylinder (4) is positioned inside the first cylinder (2, 102) in the radial direction while holding the oscillating gear (14, 16),
wherein the first and second cylinders (2, 102, 4) are concentrically rotatable relative to each other when acted upon by oscillation of the oscillating gear (14, 16) caused by rotation of the eccentric portion (10a, 10b), and
wherein the display unit (70) is shaped such that the display unit (70) is attached onto a surface of the first cylinder (2, 102).
